# EUROPEAN PATENT APPLICATION

(11) **EP 4 393 882 A1**
(43) Date of publication of application: **03.07.2024**
(21) Application number: 22861445.9
(22) Date of filing: 25.08.2022
(51) Int. Cl.: C01G 41/00, C09C 1/00, C09K 3/00, C09D 11/101

(54) **INFRARED CURABLE INK COMPOSITION, INFRARED CURED PRODUCT AND METHOD FOR PRODUCING INFRARED CURED PRODUCT**

(30) Priority: 27.08.2021 JP 2021138766
(71) Applicant: SUMITOMO METAL MINING CO., LTD., Tokyo 105-8716 (JP)
(72) Inventor: NOSHITA, Akinari, Isa-shi, Kagoshima 895-2501 (JP); CHONAN, Takeshi, Isa-shi, Kagoshima 895-2501 (JP)
(74) Representative: Jones, Nicholas Andrew
(86) International application number: PCT/JP2022/032099
(87) International publication number: WO 2023/027157

(57) **Abstract**

An infrared curable ink composition includes infrared absorbing particles and a thermosetting resin. The infrared absorbing particles include particles of a complex tungsten oxide represented by general formula MₓW_{y}O_{z} (where M element is one or more elements selected from H, He, alkali metals, alkaline earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten, O is oxygen, 0.001 ≤ x/y ≤ 1, and 3.0 < z/y).

## Description

### TECHNICAL FIELD

The present invention relates to infrared curable ink compositions, infrared cured products, and methods for producing infrared cured products.

### BACKGROUND ART

In recent years, UV curable paints that are cured by use of UV rays are widely known as environmentally sensitive paints excellent in reduction in CO₂ emission because of the ability to perform printing without heating (PTL 1).

However, when compositions in which radical polymerization is performed by irradiation with UV rays are used as UV curable inks or paints, the polymerization (curing) thereof is inhibited in the presence of oxygen. Also, when compositions in which cationic polymerization is performed by irradiation with UV rays are used, there is an issue that a strong acid is generated during the polymerization thereof. Moreover, in order to increase lightfastness of a printed or coated surface formed through coating or the like of UV curable inks or paints, a UV absorber is generally used. However, when a UV absorber is used in the UV curable inks or paints, there is an issue that curing by irradiation with UV rays is inhibited.

In order to address these issues, PTLs 2 and 3 propose infrared curable compositions that are cured by irradiation with infrared rays rather than UV rays.

PTL 2 discloses a technique using organic infrared absorbers such as cyanine-based dyes or the like and PTL 3 discloses a technique using copper phosphonate as an infrared absorber.

### CITATION LIST

### PATENT LITERATURE

PTL 1: Japanese Laid-Open Patent Application No. 2012-140516
PTL 2: Japanese Laid-Open Patent Application No. 2008-214576
PTL 3: Japanese Laid-Open Patent Application No. 2015-131928

### SUMMARY OF INVENTION

### TECHNICAL PROBLEM

Both of the infrared curable compositions disclosed in PTLs 2 and 3 are, however, insufficient in infrared ray absorbability, and there is a need for an infrared curable composition excellent in infrared ray absorbability.

Also, infrared curable compositions are required to be excellent in long-term storage stability for use in various applications.

In one aspect of the present invention, it is an object to provide an infrared curable ink composition excellent in infrared ray absorbability and long-term storage stability.

### SOLUTION TO PROBLEM

In one aspect of the present invention, provided is an infrared curable ink composition including infrared absorbing particles and a thermosetting resin, in which
the infrared absorbing particles include particles of a complex tungsten oxide represented by general formula MₓW_{y}O_{z} (where M element is one or more elements selected from H, He, alkali metals, alkaline earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten, O is oxygen, 0.001 ≤ x/y ≤ 1, and 3.0 < z/y) .

### ADVANTAGEOUS EFFECTS OF INVENTION

According to one aspect of the present invention, it is possible to provide an infrared curable ink composition excellent in infrared ray absorbability and long-term storage stability.

### BRIEF DESCRIPTION OF DRAWINGS

[FIG. 1] FIG. 1 is an explanatory view of a hybrid plasma reactor in which a direct-current plasma and a high-frequency plasma are superimposed.
[FIG. 2] FIG. 2 is an explanatory view of a high-frequency plasma reactor.
[FIG. 3] FIG. 3 is a view schematically illustrating an infrared curable ink composition according to the present embodiment.

### DESCRIPTION OF EMBODIMENTS

Hereinafter, embodiments of the present invention will be described, but the present invention is not limited to the embodiments described below. Various alterations and substitutions can be added to the following embodiments without departing from the scope of the present invention.

The infrared curable ink composition of the present embodiment (hereinafter also referred to as an "ink composition") can include the infrared absorbing particles and the thermosetting resin. Note that, the infrared curable ink composition of the present embodiment can consist of the infrared absorbing particles and the thermosetting resin. Even in this case, however, inclusion of unavoidable impurities shall not be eliminated.

The infrared absorbing particles can include the particles of the complex tungsten oxide represented by general formula MₓW_{y}O_{z} (where M element is one or more elements selected from H, He, alkali metals, alkaline earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten, O is oxygen, 0.001 ≤ x/y ≤ 1, and 3.0 < z/y) .

The inventors of the present invention studied infrared curable ink compositions excellent in infrared ray absorbability and long-term storage stability. As a result, the infrared curable ink composition including the particles of the complex tungsten oxide having a predetermined composition as infrared absorbing particles has been found to be excellent in infrared ray absorbability because the complex tungsten oxide is excellent in infrared ray absorbability. On the basis of this finding, the present invention is completed. The infrared curable ink composition as described above can efficiently cure the thermosetting resin with heat generated by the infrared absorbing particles absorbing infrared rays, especially near-infrared rays.

Also, the infrared curable ink composition in which the infrared absorbing particles as described above include the particles of the complex tungsten oxide having the predetermined composition is also excellent in transparency and long-term storage stability.

Before the infrared curable ink composition of the present embodiment is described, the infrared absorbing particles that are suitably used in the infrared curable ink composition of the present embodiment, and a production method of the infrared absorbing particles will be described.

### [Infrared absorbing particles]

### (1) Composition and crystal structure

As the infrared absorbing particles applied in the ink composition of the present embodiment, the present inventors of the present invention studied not only particles of complex tungsten oxides but also carbon black powder and tin-doped indium oxide (ITO) powder.

The carbon black powder, however, leads to reduced transparency of the resulting ink composition because the carbon black powder is black. Moreover, there is an issue with reduction in degree of freedom of color choice.

Meanwhile, the ITO powder does not enable the resulting ink composition to exhibit curability unless a large amount of the ITO powder is added. When the large amount of the ITO powder is added, there is an issue that the transparency and color tone of the ink composition are affected by the large amount of the ITO powder added.

In view thereof, the infrared curable ink composition of the present embodiment can include the particles of the complex tungsten oxide represented by general formula MₓW_{y}O_{z} as the infrared absorbing particles.

Note that, M element in the above general formula is one or more elements selected from H, He, alkali metals, alkaline earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I. W is tungsten and O is oxygen. x, y, and z can satisfy 0.001 ≤ x/y ≤ 1 and 3.0 < z/y.

It is known that materials including free electrons generally exhibit reflective absorptive response, owing to plasma oscillation, with respect to electromagnetic waves having a wavelength of from 200 nm through 2,600 nm, which is around the region of sunlight. It is also known that when powder of the materials including the free electrons is formed into particles that are smaller than the wavelength of light, transparency in the visible light region (having a wavelength of 380 nm or longer and 780 nm or shorter) is obtained through reduction in geometric scattering in the visible light region. Note that, the "transparency" in the present specification is used to mean that transmissivity is high with a small degree of scattering with respect to light in the visible light region.

Tungsten oxides represented by general formula WO₃₋ₐ and what is called tungsten bronze obtained by adding a positive element, such as Na or the like, to tungsten trioxide are known to be conductive materials and materials including free electrons. Analysis of single crystals or the like of these materials suggests response of free electrons with respect to light in the near-infrared region.

Generally, tungsten trioxide (WO₃) does not include effective free electrons and thus is poor in absorptive reflective characteristics in the infrared region. Therefore, tungsten trioxide is not effective as an infrared absorbing material. Here, it is known that by reducing the ratio of oxygen to tungsten in tungsten trioxide to be lower than 3, free electrons are generated in the tungsten oxide.

Also, a complex tungsten oxide has been produced by doping the tungsten oxide with M element. With this configuration, free electrons are generated in the complex tungsten oxide, and the complex tungsten oxide develops absorptive characteristics attributed to the free electrons in the near-infrared region. This complex tungsten oxide is effective as a material that absorbs infrared rays around a wavelength of 1,000 nm.

The present inventors of the present invention further studied the tungsten oxide and the complex tungsten oxide in order to obtain infrared absorbing particles excellent in long-term storage stability. As a result, the present inventors have found that both of infrared ray absorbability and long-term storage stability can be achieved by adjusting y and z in the above general formula to satisfy 3.0 < z/y in the infrared absorbing particles including the particles of the complex tungsten oxide represented by general formula MₓW_{y}O_{z}. Note that, the long-term storage stability in the present specification means that even if being placed at room temperature for a long period of time, e.g., for 3 months, the infrared absorbing particles or the like are excellent in infrared ray absorbability, e.g., in the case of the ink composition, it is possible to absorb infrared rays and supply a sufficient quantity of heat to cure the thermosetting resin.

As described above, the infrared absorbing particles used in the ink composition of the present embodiment can include the particles of the complex tungsten oxide represented by general formula MₓW_{y}O_{z}. The infrared absorbing particles may consist of the particles of the complex tungsten oxide represented by the above general formula. Even in this case, however, inclusion of unavoidable components in the production process or the like shall not be eliminated.

Here, from the viewpoint of increasing stability, M element in the above general formula is, as described above, preferably one or more elements selected from H, He, alkali metals, alkaline earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I. From the viewpoint of especially increasing optical characteristics as the infrared absorbing particles and the long-term storage stability, M element is more preferably an element that belongs to alkali metals, alkaline earth metal elements, transition metal elements, Group 4B elements, and Group 5B elements.

When the complex tungsten oxide includes a crystal having a hexagonal crystal structure, particles thereof have especially increased transmissivity in the visible light region and have especially increased absorption in the near-infrared region. Therefore, the complex tungsten oxide preferably includes a hexagonal crystal structure. In the hexagonal crystal structure, six octahedrons each formed of WO₆ units gather to form a hexagonal cavity (tunnel), M element is disposed in the cavity to form a single unit, and a large number of single units gather.

Note that, no limitation is imposed on the complex tungsten oxide including the crystal having the hexagonal crystal structure. For example, as long as the complex tungsten oxide has such a structure that the above unit structure, i.e., the octahedron formed of WO₆ units, gathers in the number of six to form the hexagonal cavity, and M element is disposed in the cavity, the complex tungsten oxide can have especially increased transmissivity in the visible light region and have especially increased absorption in the near-infrared region. Therefore, the complex tungsten oxide can produce high effects even if the complex tungsten oxide does not include the crystal having the hexagonal crystal structure and includes only the above unit structure.

As described above, when the complex tungsten oxide includes a structure in which a positive ion of M element is added to the hexagonal cavity, the complex tungsten oxide has especially increased absorption in the near-infrared region. Generally speaking, when M element having a large ionic radius is added, a hexagonal crystal or the above structure is readily formed. Specifically, when the complex tungsten oxide includes, as M element, one or more elements selected from Cs, Rb, K, Tl, In, Ba, Li, Ca, Sr, Fe, and Sn, a hexagonal crystal or the above structure is readily formed. Therefore, M element preferably includes one or more elements selected from Cs, Rb, K, Tl, In, Ba, Li, Ca, Sr, Fe, and Sn, and more preferably, M element is one or more elements selected from Cs, Rb, K, Tl, In, Ba, Li, Ca, Sr, Fe, and Sn.

Moreover, when of these M elements having a large ionic radius, one or more selected from Cs and Rb are included in the complex tungsten oxide, a hexagonal crystal or the above structure is readily formed in particles of the complex tungsten oxide. It is possible to achieve both of absorption in the near-infrared region and transmissivity in the visible light region, and exhibit especially high performance.

When the particles of the complex tungsten oxide including the hexagonal crystal structure have a uniform crystal structure, x/y, indicating the content proportion of M element relative to 1 mole of tungsten in the above general formula, is preferably 0.2 or more and 0.5 or less and more preferably 0.33. It is considered that when the value of x/y is 0.33, element M is disposed in all of the hexagonal cavities.

The complex tungsten oxide may include a crystal such as a tetragonal crystal, a cubic crystal, or the like, other than the above hexagonal crystal. Even in this case, the complex tungsten oxide is effective as the infrared absorbing material.

The complex tungsten oxides of a tetragonal crystal and a cubic crystal also have a suitable range and an upper limit of added element M in accordance with the structures thereof. The upper limit of x/y, indicating the content proportion of M element relative to 1 mole of tungsten, is 1 mole for the tetragonal crystal and is about 0.5 moles for the cubic crystal. Note that, the upper limit of x/y, indicating the content proportion of M element relative to 1 mole of tungsten, is varied with the type or the like of M element, but is about 0.5 moles for the cubic crystal from the viewpoint of simplified industrial production.

However, these structures are not defined in a simplified manner, and the above ranges are examples of especially fundamental ranges. Therefore, the present invention is not limited to this.

In accordance with the structure of the crystal included in the complex tungsten oxide, an absorption position in the near-infrared region tends to change. This absorption position in the near-infrared region tends to be shifted to the longer-wavelength side in the tetragonal crystal compared to the cubic crystal, and further tends to be shifted to the longer-wavelength side in the hexagonal crystal compared to the tetragonal crystal. Also, in addition to the shift of the absorption position, the absorption in the visible light region is the smallest in the hexagonal crystal and the second smallest in the tetragonal crystal, and is the largest in the cubic crystal. Therefore, it is preferable to select an included crystal system in accordance with the required performances and the like. For example, in use for applications that are required to transmit a larger quantity of light in the visible light region and absorb a larger quantity of light in the near-infrared region, the particles of the complex tungsten oxide preferably include the hexagonal crystal. Especially, the infrared curable ink composition may include a pigment, a dye, or the like as described below, but in order not to prevent color development of the pigment or the like, it is preferable to transmit light in the visible light region and absorb light in the near-infrared region.

By controlling the complex tungsten oxide in terms of the above-described oxygen amount in combination with adding element M that generates free electrons, it is possible to obtain an infrared absorbing material that is more efficient and excellent in long-term storage stability. In MₓW_{y}O_{z}, the general formula of the complex tungsten oxide that is the infrared absorbing material obtained by controlling the oxygen amount thereof in combination with adding the element that generates free electrons, x and y can be 0.001 ≤ x/y ≤ 1 and preferably satisfy 0.20 ≤ x/y ≤ 0.37.

Also, y and z in the general formula satisfy 3.0 < z/y, preferably satisfy 3.0 < z/y < 3.4, more preferably satisfy 3.0 < z/y <3.3, and further preferably satisfy 3.0 < z/y < 3.22.

It is considered that when the value of x/y is 0.33 with z/y = 3 for the complex tungsten oxide having a hexagonal crystal structure, element M is disposed in all of the hexagonal cavities.

It is confirmed through chemical analysis that z/y exceeds 3 in the complex tungsten oxide included in the infrared absorbing particles according to the present embodiment. Meanwhile, it is confirmed through powder X-ray diffraction that the complex tungsten oxide included in the infrared absorbing particles according to the present embodiment may have a tungsten bronze structure with z/y = 3 that is the tetragonal crystal, the cubic crystal, the hexagonal crystal, or any combination thereof. Therefore, the particles of the complex tungsten oxide included in the infrared absorbing particles according to the present embodiment preferably include the crystal having one or more crystal structures selected from the hexagonal crystal, the tetragonal crystal, and the cubic crystal. Inclusion of the crystal having the above crystal structure enables the above particles to exhibit especially excellent near-infrared ray absorbability and visible light transmissivity.

Meanwhile, it is considered that the oxygen atom with the z/y value exceeding 3 enters the crystal of the particles of the complex tungsten oxide. Entering of the oxygen atom into the crystal is considered to result in achieving excellent long-term storage stability without denaturing of the crystal of the particles of the complex tungsten oxide even if the particles thereof are exposed to heat or moisture.

The crystal structure of the crystal included in the particles of the complex tungsten oxide included in the infrared absorbing particles according to the present embodiment can be confirmed based on an X-ray diffraction pattern obtained through powder X-ray diffraction (Θ-2Θ method).

The infrared absorbing particles of the present embodiment exhibit light transmissive characteristics in which the local maximum is in the wavelength range of 350 nm or longer and 600 nm or shorter and the local minimum is in the wavelength range of 800 nm or longer and 2,100 nm or shorter, and can exhibit excellent near-infrared absorbing effects and long-term storage stability. More preferably, the infrared absorbing particles of the present embodiment exhibit light transmissive characteristics in which the local maximum is in the wavelength range of 440 nm or longer and 600 nm or shorter and the local minimum is in the wavelength range of 1,150 nm or longer and 2,100 nm or shorter.

### (2) Lattice constant

The general formula of the complex tungsten oxide included in the particles of the complex tungsten oxide is MₓW_{y}O_{z} as described above. When M element includes one or more elements selected from Cs and Rb and the complex tungsten oxide has a hexagonal crystal structure, the lattice constant of the complex tungsten oxide is preferably 7.3850 angstroms or more and 7.4186 angstroms or less in "a" axis and 7.5600 angstroms or more and 7.6240 angstroms or less in "c" axis. When the complex tungsten oxide has the above lattice constant, it is possible to realize especially excellent characteristics in terms of near-infrared ray absorbability and long-term storage stability. Note in the above case that, M element more preferably consists of one or more elements selected from Cs and Rb. The above lattice constant can be calculated by the Rietveld method.

### (3) Particle diameter

The particle diameter of the infrared absorbing particles according to the present embodiment is preferably 100 nm or less. From the viewpoint of exhibiting more excellent near-infrared ray absorbability, the particle diameter thereof is more preferably 10 nm or more and 100 nm or less, further preferably 10 nm or more and 80 nm or less, especially preferably 10 nm or more and 60 nm or less, and most preferably 10 nm or more and 40 nm or less. When the particle diameter of the infrared absorbing particles is in the range of 10 nm or more and 40 nm or less, the most excellent near-infrared ray absorbability is exhibited.

As used herein, the particle diameter refers to the diameter of individual infrared absorbing particles that are not aggregated, i.e., the particle diameter of each individual particle.

The particle diameter herein does not include the diameter of aggregates of the infrared absorbing particles, and is different from a dispersion particle diameter.

The particle diameter herein can be calculated, for example, in the following manner. Specifically, in a state where the infrared absorbing particles are dispersed, the particle diameter of a plurality of particles is measured using a transmission electron microscope (TEM) or the like. Note that, the infrared absorbing particles are usually amorphous, and thus the diameter of the smallest circle circumscribing the particle can be defined as the particle diameter of the particle of interest. For example, when the particle diameter of each of the plurality of particles is measured using the transmission electron microscope as described above, the particle diameters of all of the particles are preferably in the above-described range. No particular limitation is imposed on the number of the particles to be measured, but the number of the particles is preferably, for example, 10 or more and 50 or less.

### (4) Crystallite diameter

Also, from the viewpoint of exhibiting excellent near-infrared ray absorbability, the crystallite diameter of the complex tungsten oxide is preferably 10 nm or more and 100 nm or less, more preferably 10 nm or more and 80 nm or less, further preferably 10 nm or more and 60 nm or less, and especially preferably 10 nm or more and 40 nm or less. When the crystallite diameter is in the range of 10 nm or more and 40 nm or less, especially excellent near-infrared ray absorbability is exhibited. The crystallite diameter of the complex tungsten oxide particles included in the infrared absorbing particles can be calculated by the Rietveld method from an X-ray diffraction pattern measured through powder X-ray diffraction (Θ-2Θ method).

### (5) Dispersion particle diameter

Also, an infrared cured product, which is a dispersion of the infrared absorbing particles including the particles of the complex tungsten oxide according to the present embodiment, is often a product that is bluish to greenish as a color after light transmission. This is because the infrared cured product absorbs a large quantity of light in the near-infrared region, especially light having a wavelength near 1,000 nm.

The dispersion particle diameter of the infrared absorbing particles of the present embodiment can be selected in accordance with intended applications thereof. First, when the infrared absorbing particles of the present embodiment are used for applications in which transparency is retained, the infrared absorbing particles preferably have a dispersion particle diameter of 800 nm or less. This is because the particles having a dispersion particle diameter of 800 nm or less do not completely block light through scattering, and can retain visibility in the visible light region and at the same time efficiently retain transparency.

Especially, when the transparency in the visible light region is regarded as a key factor, it is preferable to further consider scattering caused by the particles. Note that, the dispersion particle diameter includes the diameter of aggregates of the infrared absorbing particles, and is different from the above-described particle diameter.

When reduction in the scattering caused by the particles is especially intended, the dispersion particle diameter of the infrared absorbing particles of the present embodiment is preferably 200 nm or less, more preferably 1 nm or more and 200 nm or less, and further preferably 1 nm or more and 100 nm or less. A reason for this is as follows. Specifically, when the dispersion particle diameter is small, light scattering through geometric scattering or Mie scattering in the visible light region that is 380 nm or more and 780 nm or less in wavelength, is reduced. As a result, it is possible to prevent the infrared cured product, which is the dispersion including the infrared absorbing particles of the present embodiment, from becoming like opaque glass and being unable to obtain clear transparency. That is, when the dispersion particle diameter is 200 nm or less, the geometric scattering or Mie scattering is reduced, and the Rayleigh scattering region is achieved. In the Rayleigh scattering region, scattering light is proportional to the 6^{th} power of the dispersion particle diameter, and as the dispersion particle diameter becomes smaller, scattering is reduced and transparency is increased. Furthermore, when the dispersion particle diameter is 100 nm or less, scattering light becomes considerably reduced, which is preferable. From the viewpoint of avoiding scattering of light, smaller dispersion particle diameters are more preferable. From the viewpoint of industrial productivity, the dispersion particle diameter of the infrared absorbing particles is preferably 1 nm or more and more preferably 10 nm or more.

When the above dispersion particle diameter is 800 nm or less, the haze (haze value) of the infrared cured product, which is an infrared absorbing particle dispersion including the infrared absorbing particles dispersed in a medium, can be 10% or less at a visible light transmissivity of 85% or less. Especially, when the dispersion particle diameter is 100 nm or less, the haze thereof can be 1% or less.

### (6) Coating

The surface of the infrared absorbing particles may be coated with a compound including one or more elements selected from Si, Ti, Zr, and Al. Coating the surface of the infrared absorbing particles with the above compound can especially increase weatherability.

As the compound including one or more elements selected from Si, Ti, Zr, and Al, it is possible to suitably use one or more selected from: hydrolyzed products of metal chelate compounds including Si, Ti, Zr, and Al; polymers of the hydrolyzed products of the metal chelate compounds; hydrolyzed products of metal cyclic oligomer compounds; and polymers of the hydrolyzed products of the metal cyclic oligomer compounds. The metal chelate compounds and the metal cyclic oligomer compounds are preferably metal alkoxides, metal acetylacetonates, and metal carboxylates, and thus preferably include one or more selected from an ether bond, an ester bond, an alkoxy group, and an acetyl group.

The treatment of coating the surface of the infrared absorbing particles with these compounds is preferably performed before preparation of a liquid dispersion of the infrared absorbing particles, the infrared curable ink composition, and the like.

### [Production method of the infrared absorbing particles]

A configuration example of the production method of the infrared absorbing particles will be described. According to the production method of the infrared absorbing particles of the present embodiment, it is possible to produce the above-described infrared absorbing particles. In the following, description of a part of the already described matter will be omitted.

The particles of the complex tungsten oxide represented by the above general formula MₓW_{y}O_{z} included in the infrared absorbing particles of the present embodiment can be produced by the following solid-phase reaction method, plasma method, or the like.

In the following, these methods will be described.

### (1) Solid-phase reaction method

When the solid-phase reaction method is used for producing the complex tungsten oxide particles, the solid-phase reaction method can include the following steps.

The tungsten compound and the M element compound are mixed to prepare a raw material mixture (mixing step). Note that, the tungsten compound and the M element compound are preferably formulated and mixed so that the ratio of the amounts by mole (mole ratio) between M element and tungsten in the raw material mixture becomes the ratio between x and y in the above general formula in the intended complex tungsten oxide particles.

The raw material mixture obtained in the mixing step is thermally treated in an atmosphere including oxygen (first thermal treatment step).

The thermally treated product obtained after the first thermal treatment step is thermally treated in a reducible gas atmosphere, in a mixed gas atmosphere of a reducible gas and an inert gas, or in an inert gas atmosphere (second thermal treatment step) .

After the second thermal treatment step, if necessary, the infrared absorbing particles may be, for example, milled so as to have a desired particle diameter.

The infrared absorbing particles of the present embodiment including the complex tungsten oxide particles obtained through the above steps have a sufficient near-infrared absorbing power, i.e., a property that is preferable as the infrared absorbing particles. Also, the infrared absorbing particles can be excellent in long-term storage stability.

In the following, these steps will be described in detail.

### (Mixing step)

The tungsten compound used in the mixing step can be, for example, one or more selected from tungstic acid (H₂WO₄), ammonium tungstate, tungsten hexachloride, and hydrates of tungsten, which are obtained by adding water to tungsten hexachloride dissolved in alcohol for hydrolysis, followed by evaporation of the solvent.

Also, the M element compound used in the mixing step can be, for example, one or more selected from oxides of M element, hydroxides of M element, nitrates of M element, sulfates of M element, chlorides of M element, and carbonates of M element.

In the mixing between the tungsten compound and the M element compound in the mixing step, the tungsten compound and the M element compound are preferably formulated and mixed so that the ratio of the amounts by mole (M : W) between M element (M) and tungsten (W) in the obtained raw material mixture becomes equal to x : y in the intended general formula MₓW_{y}O_{z}.

No particular limitation is imposed on the mixing method, and wet mixing and drying mixing can be used. In the case of wet mixing, a liquid mixture obtained after wet mixing is dried, thereby producing a powder mixture of the M element compound and the tungsten compound. No particular limitation is imposed on the drying temperature and time after the wet mixing.

In the case of dry mixing, mixing may be performed by a publicly known mixer such as a commercially available mortar machine, kneader, ball mill, sand mill, paint shaker, or the like. No particular limitation is imposed on the mixing conditions such as the mixing time, the mixing speed, and the like.

### (First thermal treatment step)

No particular limitation is imposed on the thermal treatment temperature in the first thermal treatment step. However, the thermal treatment temperature is preferably higher than a temperature at which the complex tungsten oxide particles are crystallized. Specifically, the thermal treatment temperature is, for example, preferably 500°C or higher and 1,000°C or lower and more preferably 500°C or higher and 800°C or lower.

### (Second thermal treatment step)

In the second thermal treatment step, the thermal treatment can be performed at a temperature of 500°C or higher and 1,200°C or lower in a reducible gas atmosphere, in a mixed gas atmosphere of a reducible gas and an inert gas, or in an inert gas atmosphere, as described above.

When the reducible gas is used in the second thermal treatment step, no particular limitation is imposed on the type of the reducible gas, which is however preferably hydrogen (H₂). Also, when hydrogen is used as the reducible gas, no particular limitation is imposed on the concentration thereof, which may be approximately selected in accordance with the baking temperature, the amount of starting materials, and the like. For example, the concentration thereof is 20 vol% or lower, preferably 10 vol% or lower, and more preferably 7 vol% or lower. When the concentration of the reducible gas is 20 vol% or lower, it is possible to avoid rapid reduction that generates WO₂ having no sunlight blocking function.

### (2) Plasma method

The particles of the complex tungsten oxide represented by the above general formula MₓW_{y}O_{z} included in the infrared absorbing particles of the present embodiment can be produced, for example, by the plasma method. When the plasma method is used for producing the infrared absorbing particles, the plasma method can include the following steps.

As the starting material, a raw material mixture of the tungsten compound and the M element compound, or a complex tungsten oxide precursor represented by general formula MₓW_{y}O_{z'} is prepared (raw material preparation step).

The starting material prepared in the raw material preparation step is supplied into a plasma together with a carrier gas, and undergoes an evaporation and condensation process, thereby forming intended complex tungsten oxide particles (reaction step) .

In the following, these steps will be described in detail.

### (Raw material preparation step)

When the raw material mixture of the tungsten compound and the M element compound is prepared as the starting material, the tungsten compound and the M element compound are preferably formulated and mixed so that the ratio of the amounts by mole (M : W) between M element (M) and tungsten (W) in the raw material mixture of the tungsten compound and the M element compound becomes equal to the ratio x : y between x and y in the above general formula of the intended complex tungsten oxide.

The tungsten compound and the M element compound that are suitably used are similar materials to the materials described in the solid-phase reaction method, and description thereof is omitted here.

Also, in the complex tungsten oxide precursor represented by general formula MₓW_{y}O_{z'}, M can be the above M element, W can be tungsten, and O can be oxygen, and x, y, and z' preferably satisfy 0.001 ≤ x/y ≤ 1 and 2.0 < z'/y.

The complex tungsten oxide precursor represented by general formula MₓW_{y}O_{z'} can be synthesized, for example, by the above-described solid-phase reaction method. The complex tungsten oxide precursor is preferably a material with x/y that matches x/y in the particles of the complex tungsten oxide represented by the intended general formula MₓW_{y}O_{z}.

### (Reaction step)

As a carrier gas that carries the starting material in the reaction step, a gas mixture of an inert gas and an oxygen gas can be used.

The plasma can be generated, for example, in an inert gas alone or in an atmosphere of a gas mixture of an inert gas and a hydrogen gas. No particular limitation is imposed on the plasma, but a thermal plasma is preferable. The raw materials supplied into the plasma instantly evaporate, and the evaporated raw materials condense in the process in which the raw materials reach a plasma tail flame region, followed by solidification through rapid cooling external of the plasma flame, thereby forming the particles of the complex tungsten oxide. According to the plasma method, it is possible to form, for example, the particles of the complex tungsten oxide whose crystal phase is a single phase.

The plasma used for the production method of the infrared absorbing particles of the present embodiment is preferably a direct-current arc plasma, a high-frequency plasma, a microwave plasma, or a low-frequency alternating-current plasma, or a plasma obtained by superimposing these. Alternatively, the plasma used for the production method of the infrared absorbing particles of the present embodiment is preferably a plasma obtained by an electric method in which a magnetic field is applied to a direct-current plasma, a plasma obtained by a high-power laser, or a plasma obtained by high-power electron beams or ion beams. Regardless of the type of the thermal plasma, the thermal plasma for use is preferably a thermal plasma having a high-temperature region of 10,000 K or higher and more desirably 10,000 K or higher and 25,000 K or lower; especially a plasma that can control the formation time of the particles.

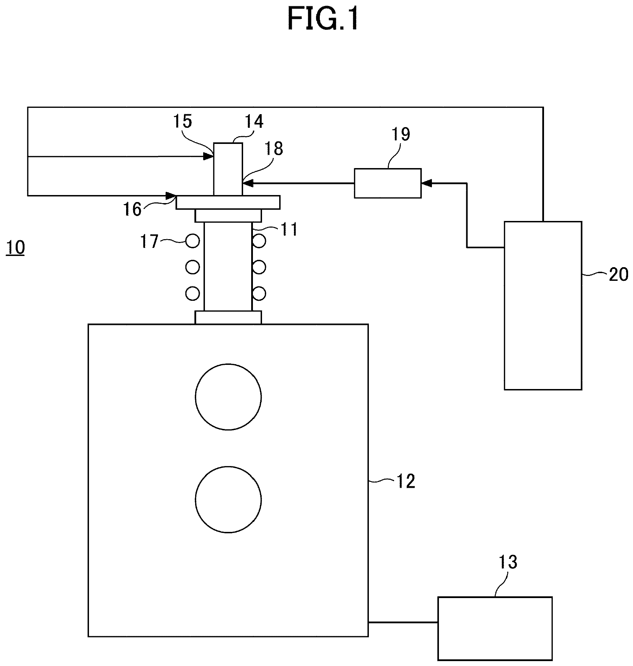

A specific configuration example of the reaction step in the production method of the infrared absorbing particles of the present embodiment by the plasma method will be described with reference to FIG. 1.

An apparatus as illustrated in FIG. 1 is a hybrid plasma reactor 10 obtained by superimposing a direct-current plasma apparatus and a high-frequency plasma apparatus.

The hybrid plasma reactor 10 includes a water-cooled quartz double tube 11 and a reaction chamber 12 connected to the water-cooled quartz double tube 11. Also, a vacuum exhauster 13 is connected to the reaction chamber 12.

A direct-current plasma torch 14 is provided above the water-cooled quartz double tube 11, and the direct-current plasma torch 14 is provided with a plasma-generating gas supply port 15.

The hybrid plasma reactor 10 is configured such that a sheath gas for generation of a high-frequency plasma and for protection of a quartz tube can be supplied along the inner wall of the water-cooled quartz double tube 11 externally of the plasma region. A flange above the water-cooled quartz double tube 11 is provided with a sheath gas inlet 16.

A water-cooled copper coil 17 for generation of a high-frequency plasma is disposed around the water-cooled quartz double tube 11.

A raw material powder carrier gas supply port 18 is provided near the direct-current plasma torch 14, and is connected via a tube to a raw material powder supply apparatus 19 configured to supply raw material powder.

A gas supply apparatus 20 is connected via tubes to the plasma-generating gas supply port 15, the sheath gas inlet 16, and the raw material powder supply apparatus 19 so that a predetermined gas can be supplied from the gas supply apparatus 20 to respective members. Note that, if necessary, a supply port may be provided in portions of the apparatus in addition to the above members so as to be able to cool the members in the apparatus and achieve a predetermined atmosphere in the apparatus. The supply port may be connected to the gas supply apparatus 20.

A configuration example of the production method of the particles of the complex tungsten oxide using the above hybrid plasma reactor 10 will be described.

First, the interior of a reaction system, composed of the interior of the water-cooled quartz double tube 11 and the interior of the reaction chamber 12, is vacuumed by the vacuum exhauster 13. No particular limitation is imposed on the degree of vacuum at this time, but the interior of the reaction system can be vacuumed to, for example, about 0.1 Pa (about 0.001 Torr). After the interior of the reaction system is vacuumed, argon gas is supplied thereto from the gas supply apparatus 20, and the interior of the reaction system can be filled with the argon gas. For example, it is preferable to allow the interior of the reaction system to be an argon gas flow system of 1 atm.

Subsequently, a plasma gas can be supplied to the interior of the reaction chamber 12. No particular limitation is imposed on the plasma gas, but it is possible to use, for example, gas selected from argon gas, a gas mixture of argon and helium (Ar-He gas mixture), a gas mixture of argon and nitrogen (Ar-N₂ gas mixture), neon, helium, and xenon.

No particular limitation is imposed on the flow rate of the plasma gas to be supplied. However, for example, the plasma gas can be introduced from the plasma-generating gas supply port 15 preferably at a flow rate of 3 L/min or more and 30 L/min or less and more preferably at a flow rate of 3 L/min or more and 15 L/min or less. Then, the direct-current plasma can be generated.

Meanwhile, a sheath gas for generation of a high-frequency plasma and for protection of a quartz tube can be spirally supplied from the sheath gas inlet 16 along the inner wall of the water-cooled quartz double tube 11 externally of the plasma region. No particular limitation is imposed on the type and supply speed of the sheath gas. However, for example, argon gas is allowed to flow at 20 L/min or more and 50 L/min or less and hydrogen gas is allowed to flow at 1 L/min or more and 5 L/min or less, thereby generating a high-frequency plasma.

A high-frequency power can be applied to the water-cooled copper coil 17 for generation of a high-frequency plasma. No particular limitation is imposed on the high-frequency power. However, for example, a high-frequency power having a frequency of about 4 MHz can be applied at 15 kW or more and 50 kW or less.

After the generation of such a hybrid plasma, a carrier gas can be used to introduce the raw materials into the raw material powder carrier gas supply port 18 from the raw material powder supply apparatus 19. No particular limitation is imposed on the carrier gas. However, for example, it is possible to use a gas mixture of argon gas at 1 L/min or more and 8 L/min or less and oxygen gas at 0.001 L/min or more and 0.8 L/min or less.

Reaction is performed by introducing the following into the plasma: the raw material mixture serving as the starting materials supplied into the plasma; or the complex tungsten oxide precursor. No particular limitation is imposed on the supply speed of the starting materials from the raw material powder carrier gas supply port 18. However, for example, the starting materials are supplied preferably at a rate of 1 g/min or more and 50 g/min or less and more preferably at a rate of 1 g/min or more and 20 g/min or less.

When the supply speed of the starting materials is 50 g/min or less, it is possible to sufficiently increase the proportion of the starting materials that pass through the center portion of the plasma flame, decrease the proportion of an unreacted product or an intermediate product, and increase the proportion of desired complex tungsten oxide particles that are formed. Also, when the supply speed of the starting materials is 1 g/min or more, it is possible to increase productivity.

The starting materials supplied into the plasma instantly evaporate in the plasma and undergo the condensation process, thereby forming complex tungsten oxide particles having an average primary particle diameter of 100 nm or less.

Note that, the particle diameter of the complex tungsten oxide particles obtained by the production method of the present embodiment can be readily controlled based on the output of the plasma, the flow rate of the plasma, the amount of the raw material powder to be supplied, and the like.

After the reaction, the formed complex tungsten oxide particles are deposited on the reaction chamber 12, and the deposited product can be recovered.

Note that, the surface of the infrared absorbing particles obtained by the production method as described above may be coated with a coating film. The coating film is already described, and thus description thereof is omitted here.

In the above, the production method of the infrared absorbing particles of the present embodiment has been described. The infrared absorbing particles obtained by the production method as described above can be evaluated and confirmed, for example, by the following method.

For example, the constituent elements of the infrared absorbing particles obtained by the above production method of the infrared absorbing particles can be quantified through chemical analysis. No particular limitation is imposed on the analysis method. However, for example, M element and tungsten can be analyzed through plasma optical emission spectrometry, and oxygen can be analyzed through inert gas impulse heat-fusion infrared absorption.

Also, the crystal structure of the complex tungsten oxide included in the infrared absorbing particles can be confirmed through powder X-ray diffraction.

The particle diameter of the infrared absorbing particles can be confirmed through measurement of the particle diameter based on TEM observation or dynamic light scattering.

### [Infrared curable ink composition]

The infrared curable ink composition of the present embodiment can include the infrared absorbing particles and the thermosetting resin. Note that, the thermosetting resin is preferably in an uncured state, and specifically in, for example, a state where the thermosetting resin has flowability.

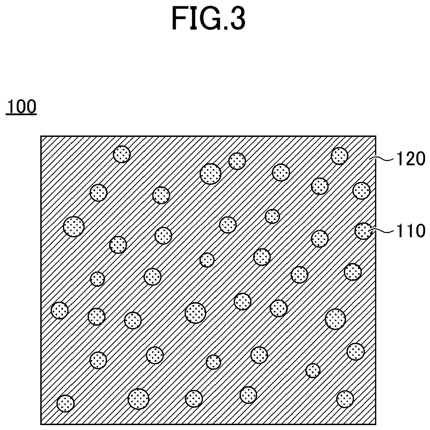

That is, for example, as illustrated in FIG. 3, an infrared curable ink composition 100 of the present embodiment can include infrared absorbing particles 110 as described above, and a thermosetting resin 120.

Note that, FIG. 3 is a schematic view, and the infrared curable ink composition 100 of the present embodiment is not limited to the illustrated form. For example, in FIG. 3, the infrared absorbing particles 110 are illustrated as spherical particles, but the shape of the infrared absorbing particles 110 is not limited to such a form and may be any given shape. Also, the infrared absorbing particles 110 may include a coating on the surface thereof as described above. An electromagnetic wave-absorbing particle liquid dispersion 10 may, if necessary, include additives such as a solvent, a dispersant, and the like as described below, in addition to the infrared absorbing particles 110 and the thermosetting resin 120.

In the following, the components included in the infrared curable ink composition of the present embodiment will be described.

### (1) Thermosetting resin

No particular limitation is imposed on the thermosetting resin. However, for example, it is possible to use one or more selected from epoxy resins, urethane resins, acrylic resins, urea resins, melamine resins, phenol resins, ester resins, polyimide resins, silicone resins, unsaturated polyester resins, and the like.

These thermosetting resins are cured by application of thermal energy from the infrared absorbing particles that are irradiated with infrared rays. Thus, the thermosetting resins for use may be uncured resins. The thermosetting resins may include: monomers and oligomers that form the thermosetting resins through curing reaction; and a publicly known curing agent that is appropriately added. Moreover, a publicly known curing accelerator may be added to the curing agent.

### (2) Infrared absorbing particles

As the infrared absorbing particles, the above-described infrared absorbing particles can be used. As the infrared absorbing particles are already described, description thereof is omitted here.

No particular limitation is imposed on the content of the infrared absorbing particles in the infrared curable ink composition of the present embodiment, and the content thereof can be selected in accordance with, for example, the properties required for the infrared curable ink composition.

The amount of the infrared absorbing particles included in the infrared curable ink composition of the present embodiment may be determined so that the uncured thermosetting resin is cured upon curing reaction. Then, the infrared absorbing particles may be added in the determined amount.

Therefore, while further considering the coating thickness of the infrared curable ink composition to be coated, it is possible to select and determine the amount of the infrared absorbing particles per coating area of the near-infrared curable ink composition.

The infrared absorbing particles are preferably dispersed in the infrared curable ink composition, e.g., the below-described solvent or the like. No particular limitation is imposed on the method of dispersing the infrared absorbing particles in the infrared curable ink composition, but use of a wet media mill is preferable.

### (3) Other components

The infrared curable ink composition of the present embodiment may consist of the above thermosetting resin and infrared absorbing particles. However, the infrared curable ink composition of the present embodiment may further include a given component, and for example, may also include the below-described pigment, dye, dispersant, solvent, or the like in accordance with the intended purpose. Note that, even if the infrared curable ink composition consists of the thermosetting resin and the infrared absorbing particles as described above, inclusion of unavoidable components or the like in the production process shall not be eliminated.

### (3-1) Pigment and dye

As described above, the infrared curable ink composition of the present embodiment may further include one or more selected from organic pigments, inorganic pigments, and dyes for coloring the ink composition.

### (3-1-1) Pigment

No particular limitation is imposed on the pigment, and publicly known pigments can be used without any particular limitation. It is preferable to use one or more selected from insoluble pigments, organic pigments such as lake pigments and the like, and inorganic pigments such as carbon black and the like.

These pigments preferably exist in a state of being dispersed in the infrared curable ink composition of the present embodiment. Publicly known methods can be used as the method of dispersing these pigments without any particular limitation.

Note that, no particular limitation is imposed on the above insoluble pigments, but it is possible to use azo, azomethine, methine, diphenylmethane, triphenylmethane, quinacridone, anthraquinone, perylene, indigo, quinophthalone, isoindolinone, isoindoline, azine, oxazine, thiazine, dioxazine, thiazole, phthalocyanine, diketopyrrolopyrrole, or the like.

No particular limitation is imposed on the organic pigments, but names of preferably usable specific pigments are listed below.

As pigments for magenta or red, examples thereof include C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 202, C.I. Pigment Red 222, C.I. Pigment Violet 19, and the like.

As pigments for orange or yellow, examples thereof include C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 15:3, C.I. Pigment Yellow 17, C.I. Pigment Yellow 74, C.I. Pigment Yellow 93, C.I. Pigment Yellow 128, C.I. Pigment Yellow 94, C.I. Pigment Yellow 138, and the like.

As pigments for green or cyan, examples thereof include C.I. Pigment Blue 15, C.I. Pigment Blue 15:2, C.I. Pigment Blue 15:3, C.I. Pigment Blue 16, C.I. Pigment Blue 60, C.I. Pigment Green 7, and the like.

As pigments for black, examples thereof include C.I. Pigment Black 1, C.I. Pigment Black 6, C.I. Pigment Black 7, and the like.

No particular limitation is imposed on the inorganic pigments, but it is preferable to use, for example, carbon black, titanium dioxide, zinc sulfide, zinc oxide, zinc phosphate, mixed metal oxide phosphates, iron oxide, ferromanganese oxide, chromium oxide, ultramarine, nickel or chromium antimony titanium oxide, cobalt oxide, aluminum, aluminum oxide, silicon oxide, silicates, zirconium oxide, mixed oxides of cobalt and aluminum, molybdenum sulfide, rutile mixed-phase pigments, sulfides of rare-earth elements, bismuth vanadate, or extender pigments such as aluminum hydroxide, barium sulfate, and the like.

No particular limitation is imposed on the dispersion particle diameter (average dispersion particle diameter) of the pigment dispersed in the infrared curable ink composition according to the present embodiment, but the dispersion particle diameter thereof is, for example, preferably 1 nm or more and 200 nm or less. When the dispersion particle diameter of the liquid pigment dispersion is 1 nm or more and 200 nm or less, storage stability thereof in the infrared curable ink composition is especially favorable. The dispersion particle diameter can be measured with, for example, ELS-8000 available from Otsuka Electronics Co., Ltd., which is a particle size analyzer based on dynamic light scattering.

### (3-1-2) Dye

No particular limitation is imposed on the dye, and an oil-soluble dye and a water-soluble dye can be used. It is preferable to use a yellow dye, a magenta dye, a cyan dye, or the like.

As the yellow dye, examples thereof include: aryl or heterylazo dyes including, for example, phenols, naphthols, anilines, pyrazolones, pyridones, or ring-opening active methylene compounds, as coupling components; azomethine dyes including, for example, ring-opening active methylene compounds as coupling components; methine dyes such as benzylidene dyes, monomethine oxonole dyes, and the like; and quinone-based dyes such as naphthoquinone dyes, anthraquinone dyes, and the like; and the like. Examples of the dyes other than the above include quinophthalone dyes, nitro-nitroso dyes, acridine dyes, acridinone dyes, and the like. These dyes may be assumed to be yellow only when a part of the chromophore is dissociated. The counter cation in that case may be an alkali metal or an inorganic cation such as ammonium or the like, may be an organic cation such as pyridinium, a quaternary ammonium salt, or the like, or further may be a polymer cation including the forgoing in a partial structure thereof.

As the magenta dye, examples thereof include: aryl or heterylazo dyes including, for example, phenols, naphthols, or anilines, as coupling components; azomethine dyes including, for example, pyrazolones or pyrazolotriazoles as coupling components; methine dyes such as arylidene dyes, styryl dyes, merocyanine dyes, oxonole dyes, and the like; carbonium dyes such as diphenylmethane dyes, triphenylmethane dyes, xanthene dyes, and the like; quinone-based dyes such as naphthoquinone, anthraquinone, anthrapyridone, and the like; condensed polycyclic dyes such as dioxazine dyes and the like; and the like. These dyes may assume magenta only when a part of the chromophore is dissociated. The counter cation in that case may be an alkali metal or an inorganic cation such as ammonium or the like, may be an organic cation such as pyridinium, a quaternary ammonium salt, or the like, or further may be a polymer cation including the forgoing in a partial structure thereof.

As the cyan dye, examples thereof include: azomethine dyes such as indoaniline dyes, indophenol dyes, and the like; polymethine dyes such as cyanine dyes, oxonole dyes, merocyanine dyes, and the like; carbonium dyes such as diphenylmethane dyes, triphenylmethane dyes, xanthene dyes, and the like; phthalocyanine dyes; anthraquinone dyes; and aryl or heterylazo dyes including, for example, phenols, naphthols, or anilines, as coupling components; indigo and thioindigo dyes; and the like. These dyes may assume cyan only when a part of the chromophore is dissociated. The counter cation in that case may be an alkali metal or an inorganic cation such as ammonium or the like, may be an organic cation such as pyridinium, a quaternary ammonium salt, or the like, or further may be a polymer cation including the forgoing in a partial structure thereof. Also, black dyes such as polyazo dyes and the like may be used.

No particular limitation is imposed on the water-soluble dyes, and it is preferable to use a direct dye, an acid dye, a food dye, a basic dye, a reactive dye, or the like.

As the water-soluble dyes, names of preferably usable specific dyes are listed below.

Specifically, examples include
C.I. Direct Red 2, 4, 9, 23, 26, 31, 39, 62, 63, 72, 75, 76, 79, 80, 81, 83, 84, 89, 92, 95, 111, 173, 184, 207, 211, 212, 214, 218, 21, 223, 224, 225, 226, 227, 232, 233, 240, 241, 242, 243, 247,
C.I. Direct Violet 7, 9, 47, 48, 51, 66, 90, 93, 94, 95, 98, 100, 101,
C.I. Direct Yellow 8, 9, 11, 12, 27, 28, 29, 33, 35, 39, 41, 44, 50, 53, 58, 59, 68, 86, 87, 93, 95, 96, 98, 100, 106, 108, 109, 110, 130, 132, 142, 144, 161, 163,
C.I. Direct Blue 1, 10, 15, 22, 25, 55, 67, 68, 71, 76, 77, 78, 80, 84, 86, 87, 90, 98, 106, 108, 109, 151, 156, 158, 159, 160, 168, 189, 192, 193, 194, 199, 200, 201, 202, 203, 207, 211, 213, 214, 218, 225, 229, 236, 237, 244, 248, 249, 251, 252, 264, 270, 280, 288, 289, 291,
C.I. Direct Black 9, 17, 19, 22, 32, 51, 56, 62, 69, 77, 80, 91, 94, 97, 108, 112, 113, 114, 117, 118, 121, 122, 125, 132, 146, 154, 166, 168, 173, 199,
C.I. Acid Red 35, 42, 52, 57, 62, 80, 82, 111, 114, 118, 119, 127, 128, 131, 143, 151, 154, 158, 249, 254, 257, 261, 263, 266, 289, 299, 301, 305, 336, 337, 361, 396, 397,
C.I. Acid Violet 5, 34, 43, 47, 48, 90, 103, 126,
C.I. Acid Yellow 17, 19, 23, 25, 39, 40, 42, 44, 49, 50, 61, 64, 76, 79, 110, 127, 135, 143, 151, 159, 169, 174, 190, 195, 196, 197, 199, 218, 219, 222, 227,
C.I. Acid Blue 9, 25, 40, 41, 62, 72, 76, 78, 80, 82, 92, 106, 112, 113, 120, 127:1, 129, 138, 143, 175, 181, 205, 207, 220, 221, 230, 232, 247, 258, 260, 264, 271, 277, 278, 279, 280, 288, 290, 326,
C.I. Acid Black 7, 24, 29, 48, 52:1, 172,
C.I. Reactive Red 3, 13, 17, 19, 21, 22, 23, 24, 29, 35, 37, 40, 41, 43, 45, 49, 55,
C.I. Reactive Violet 1, 3, 4, 5, 6, 7, 8, 9, 16, 17, 22, 23, 24, 26, 27, 33, 34,
C.I. Reactive Yellow 2, 3, 13, 14, 15, 17, 18, 23, 24, 25, 26, 27, 29, 35, 37, 41, 42,
C.I. Reactive Blue 2, 3, 5, 8, 10, 13, 14, 15, 17, 18, 19, 21, 25, 26, 27, 28, 29, 38,
C.I. Reactive Black 4, 5, 8, 14, 21, 23, 26, 31, 32, 34,
C.I. Basic Red 12, 13, 14, 15, 18, 22, 23, 24, 25, 27, 29, 35, 36, 38, 39, 45, 46,
C.I. Basic Violet 1, 2, 3, 7, 10, 15, 16, 20, 21, 25, 27, 28, 35, 37, 39, 40, 48,
C.I. Basic Yellow 1, 2, 4, 11, 13, 14, 15, 19, 21, 23, 24, 25, 28, 29, 32, 36, 39, 40,
C.I. Basic Blue 1, 3, 5, 7, 9, 22, 26, 41, 45, 46, 47, 54, 57, 60, 62, 65, 66, 69, 71,
C.I. Basic Black 8, and the like.

The particle dimeter of the above-described pigments or the like that are colorants is preferably determined in consideration of characteristics of a coater for the infrared curable ink composition.

### (3-2) Dispersant

The infrared curable ink composition of the present embodiment may further include a dispersant. That is, the above-described infrared absorbing particles may be dispersed together with the dispersant in the thermosetting resin or in a solvent, which is an optional component as described below. The dispersant enables the infrared absorbing particles to be readily dispersed in the infrared curable ink composition. Also, when a coated film of the infrared curable ink composition is cured, it is possible to suppress variation in curing, among others.

No particular limitation is imposed on the dispersant used in the near-infrared curable ink composition of the present embodiment, and for example, a commercially available dispersant can be optionally used. However, a molecular structure of the dispersant preferably includes: a main chain, such as a polyester-based chain, a polyacrylic chain, a polyurethane-based chain, a polyamine-based chain, a polycaprolactone-based chain, a polystyrene-based chain, or the like; and a functional group, such as an amino group, an epoxy group, a carboxyl group, a hydroxy group, a sulfo group, or the like. The dispersant having such a molecular structure does not denature when a coated film of the infrared curable ink composition of the present embodiment is intermittently irradiated with infrared rays for several tens of seconds. Therefore, it is possible to especially suppress occurrence of failures such as coloring due to denaturing.

Specific examples of the commercially available dispersant that is suitably used include:
as products of Lubrizol Japan, Ltd., SOLSPERSE3000, SOLSPERSE9000, SOLSPERSE11200, SOLSPERSE13000, SOLSPERSE13240, SOLSPERSE13650, SOLSPERSE13940, SOLSPERSE16000, SOLSPERSE17000, SOLSPERSE18000, SOLSPERSE20000, SOLSPERSE21000, SOLSPERSE24000SC, SOLSPERSE24000GR, SOLSPERSE26000, SOLSPERSE27000, SOLSPERSE28000, SOLSPERSE31845, SOLSPERSE32000, SOLSPERSE32500, SOLSPERSE32550, SOLSPERSE32600, SOLSPERSE33000, SOLSPERSE33500, SOLSPERSE34750, SOLSPERSE35100, SOLSPERSE35200, SOLSPERSE36600, SOLSPERSE37500, SOLSPERSE38500, SOLSPERSE39000, SOLSPERSE41000, SOLSPERSE41090, SOLSPERSE53095, SOLSPERSE55000, SOLSPERSE56000, SOLSPERSE76500, and the like;
as products of BYK Japan KK, Disperbyk-101, Disperbyk-103, Disperbyk-107, Disperbyk-108, Disperbyk-109, Disperbyk-110, Disperbyk-111, Disperbyk-112, Disperbyk-116, Disperbyk-130, Disperbyk-140, Disperbyk-142, Disperbyk-145, Disperbyk-154, Disperbyk-161, Disperbyk-162, Disperbyk-163, Disperbyk-164, Disperbyk-165, Disperbyk-166, Disperbyk-167, Disperbyk-168, Disperbyk-170, Disperbyk-171, Disperbyk-174, Disperbyk-180, Disperbyk-181, Disperbyk-182, Disperbyk-183, Disperbyk-184, Disperbyk-185, Disperbyk-190, Disperbyk-2000, Disperbyk-2001, Disperbyk-2020, Disperbyk-2025, Disperbyk-2050, Disperbyk-2070, Disperbyk-2095, Disperbyk-2150, Disperbyk-2155, Anti-Terra-U, Anti-Terra-203, Anti-Terra-204, BYK-P104, BYK-P104S, BYK-220S, BYK-6919, and the like;
as products of BASF Japan KK, EFKA4008, EFKA4046, EFKA4047, EFKA4015, EFKA4020, EFKA4050, EFKA4055, EFKA4060, EFKA4080, EFKA4300, EFKA4330, EFKA4400, EFKA4401, EFKA4402, EFKA4403, EFKA4500, EFKA4510, EFKA4530, EFKA4550, EFKA4560, EFKA4585, EFKA4800, EFKA5220, EFKA6230, JONCRYL67, JONCRYL678, JONCRYL586, JONCRYL611, JONCRYL680, JONCRYL682, JONCRYL690, JONCRYL819, JONCRYL-JDX5050, and the like; and
as products of Ajinomoto Fine-Techno Co., Ltd., AJISPER PB-711, AJISPER PB-821, AJISPER PB-822, and the like.

### (3-3) Solvent

The infrared curable ink composition of the present embodiment may use a solvent together with the thermosetting resin. That is, the infrared curable ink composition of the present embodiment may further include the solvent. Note that, when the infrared curable ink composition includes the solvent, the infrared absorbing particles and the like are included and dispersed in the solvent, and thus the solvent can also be referred to as a dispersion medium.

As the solvent of the infrared curable ink composition, it is possible to use water; alcohols, such as methanol, ethanol, propanol, butanol, isopropyl alcohol, isobutyl alcohol, diacetone alcohol, and the like; ethers, such as methyl ether, ethyl ether, propyl ether, and the like; esters; ketones, such as acetone, methyl ethyl ketone, diethyl ketone, cyclohexanone, isobutyl ketone, methyl isobutyl ketone, and the like; and various organic solvents, such as ethylene glycol monoethyl ether, ethylene glycol monobutyl ether, polyethylene glycol, polypropylene glycol, and the like.

Also, together with or instead of the solvent of the infrared curable ink composition, use of a monomer of the thermosetting resin in a state of being uncured is preferable. In this case, it is possible to achieve a configuration with no use of a solvent such as an organic solvent or the like.

Moreover, as the solvent of the infrared curable ink composition, it is preferable to use a reactive organic solvent having a functional group such as an epoxy group or the like that reacts with the thermosetting resin monomer or oligomer included in the thermosetting resin in a state of being uncured upon curing reaction of the thermosetting resin.

### (4) Regarding infrared curable ink composition

The infrared curable ink composition of the present embodiment can be prepared, for example, by adding the infrared absorbing particles to an uncured thermosetting resin. Alternatively, the infrared curable ink composition of the present embodiment may be prepared by dispersing the infrared absorbing particles in an appropriate solvent, followed by addition of an uncured thermosetting resin.

The infrared curable ink composition of the present embodiment can include the particles of the complex tungsten oxide as the infrared absorbing particles. The infrared curable ink composition of the present embodiment may be, for example, an infrared curable ink composition including the infrared absorbing particles, the solvent, the dispersant, and the thermosetting resin. Upon use or the like, the solvent can be removed from the infrared curable ink composition. Alternatively, the infrared curable ink composition of the present embodiment may include no solvent and may include: the particles of the complex tungsten oxide as the infrared absorbing particles; the dispersant; and the thermosetting resin.

Because the infrared curable ink composition of the present embodiment includes the above-described infrared absorbing particles, the infrared curable ink composition can assume neutral color tone, for example, when being coated on a substrate and formed into a cured product (cured body) by irradiation with infrared rays. Also, because the above infrared absorbing particles are excellent in absorptive characteristics of near-infrared rays, the infrared absorbing particles supply a sufficient quantity of heat when being irradiated with near-infrared rays or the like, and can sufficiently increase adhesion of the obtained cured product to the substrate.

The infrared curable ink composition of the present embodiment can be used for applications of existing inks that form infrared curable films on substrates. Also, the infrared curable ink composition of the present embodiment can also be applied to photofabrication that fabricates a three-dimensional object by coating a predetermined amount of the infrared curable ink composition on a substrate, followed by irradiation with infrared rays, curing, and stacking.

When the infrared curable ink composition of the present embodiment includes the solvent, the viscosity thereof can be adjusted and the handleability upon coating thereof onto the substrate or the like can be increased.

As described above, however, the infrared curable ink composition of the present embodiment may include no solvent. When the infrared curable ink composition includes no solvent, the infrared curable ink composition of the present embodiment may include, for example, the infrared absorbing particles, the thermosetting resin, and if necessary, the dispersant and the like. The infrared curable ink composition of the present embodiment including no solvent can omit a treatment of evaporation or the like of the solvent, and it is possible to increase efficiency for curing a coated product of the infrared curable ink composition.

Note that, when the near-infrared curable ink composition of the present embodiment includes the solvent, no particular limitation is imposed on the method of removing the solvent after coating of the near-infrared curable ink composition. For example, it is possible to use distillation under heating in combination with reduction in pressure.

### [Infrared cured product]

The infrared cured product of the present embodiment can be a cured product of the above-described infrared curable ink composition.

Note that, the infrared cured product of the present embodiment may be disposed on the substrate, or may be present alone without the substrate or the like. The substrate will be described in the below-described production method of the infrared cured product.

The infrared cured product of the present embodiment may have a film shape, or may have a stereoscopic shape such as a three-dimensional shape. When the infrared cured product has the film shape, the infrared cured product of the present embodiment may also be referred to as an infrared cured film.

### [Production method of the infrared cured product]

The infrared cured product of the present embodiment can be produced by the production method of the infrared cured product including a coating step and a curing step as described below. According to the production method of the infrared cured product of the present embodiment, the above-described infrared cured product can be produced.

In the coating step, it is possible to form a coated product by coating the above-described infrared curable ink composition. Note that, after the coating step, the solvent and the like can be removed, if necessary.

In the curing step, it is possible to cure the coated product by irradiation with infrared rays.

The coating step and the curing step can be performed repeatedly so as to obtain the infrared cured product having a desired shape and size. Note that, the infrared cured product may have the film shape, and in this case, the infrared cured product may also be referred to as the infrared cured film, and the production method of the infrared cured product may also be referred to as the production method of the infrared cured film.

Also, according to the production method of the infrared cured product of the present embodiment, it is possible to fabricate and produce the infrared cured product, which is the three-dimensional object, on the substrate or the like.

According to the production method of the infrared cured product of the present embodiment, the infrared cured product is obtained by the above steps in which the coated product obtained by coating the infrared curable ink composition onto the substrate or the like is irradiated with infrared rays. In the above curing process, the infrared absorbing particles in the infrared curable ink composition absorb irradiated infrared rays and generate heat, and the generated heat energy promotes reactions such as polymerization reaction, condensation reaction, addition reaction, and the like of monomers, oligomers, and the like included in the uncured thermosetting resin, thereby causing curing reaction of the thermosetting resin.

Note that, when the infrared curable ink composition includes the solvent, evaporation of the solvent may also be performed by the action of heat generated from the infrared absorbing particles by irradiation with infrared rays in the curing step.

Even if the infrared cured film of the present embodiment is further irradiated with infrared rays, the cured film does not re-fuse. A reason for this is as follows. Specifically, the infrared cured film of the present embodiment includes the thermosetting resin obtained by curing the uncured thermosetting resin in the infrared curable ink composition. Thus, even if the infrared absorbing particles generate heat by irradiation with infrared rays, re-fusion of the cured film does not occur.

This property is especially advantageous in the photofabrication process including curing and stacking the infrared curable ink composition of the present embodiment, and repeating stacking of repeatedly performing coating of the infrared curable ink composition and irradiation with infrared rays, thereby fabricating the three-dimensional object.

In the following, these steps will be described.

### (1) Coating step

In the coating step, it is possible to coat the above-described infrared curable ink composition onto the substrate or the like, and form the coated film.

No particular limitation is imposed on the material of the substrate (base) to which the infrared curable ink composition is coated in the coating step.

As the substrate, for example, it is possible to use one or more substrates selected from paper, a resin, glass, and the like.

No particular limitation is imposed on the resin. However, for example, it is possible to use one or more selected from polyesters such as PET (polyethylene terephthalate) and the like; and acrylic resins, urethane, polycarbonate, polyethylene, ethylene-vinyl acetate copolymers, vinyl chlorides, fluororesins, polyimide, polyacetal, polypropylene, nylon, and the like.

No particular limitation is imposed on the shape of the substrate. The shape of the substrate may be a shape that conforms to the shape required for the infrared cured product, and may be a plate shape or the like.

No particular limitation is imposed on the method of coating the infrared curable ink composition on the surface of the substrate. However, it is possible to use dipping, flow coating, spraying, bar coating, spin coating, gravure coating, roll coating, screen printing, blade coating, or the like.

### (2) Curing step

In the curing step, the coated product can be irradiated with infrared rays, thereby curing the infrared curable ink composition. By performing the curing step, the infrared cured product can be produced.

The method of curing the infrared curable ink composition is preferably irradiation with infrared rays and more preferably irradiation with near-infrared rays. Infrared rays have a high energy density, and can efficiently provide energy necessary for curing the resin in the infrared curable ink composition.

It is also preferable to perform curing of the infrared curable ink composition by combining infrared-ray irradiation with a given method selected from publicly known methods. For example, such a method of heating, air blowing, or irradiation with electromagnetic waves may be used in combination with infrared-ray irradiation.

Note that, in the present specification, infrared rays refer to electromagnetic waves having a wavelength in the range of 0.75 um or longer and 1 mm or shorter, near-infrared rays refer to infrared rays having a wavelength of 0.75 um or longer and 4 um or shorter, and far-infrared rays refer to infrared rays having a wavelength of longer than 4 um and 1,000 um or shorter. Generally, even in the case of irradiation with infrared rays referred to as far-infrared rays or near-infrared rays, it is possible to cure the infrared curable ink composition, and obtain similar effects. However, in the case of irradiation with near-infrared rays, it is possible to cure a coated film more quickly and more efficiently.

As described above, electromagnetic waves can be irradiated together with infrared rays upon curing the infrared curable ink composition. It is suitable to use microwaves as such electromagnetic waves. Note that, microwaves refer to electromagnetic waves having a wavelength in the range of 1 mm or longer and 1 m or shorter.

The microwaves for irradiation preferably have a power of 200 W or higher and 1,000 W or lower. When the power is 200 W or higher, vaporization of the solvent and the like remaining in the infrared curable ink composition is promoted. When the power is 1,000 W or lower, irradiation conditions are moderate, and there is no risk that the substrate and the thermosetting resin would denature.

No particular limitation is imposed on the time of irradiation of the infrared curable ink composition with infrared rays. The above time of irradiation is varied with the energy for irradiation and the wavelength thereof, the composition of the infrared curable ink composition, and the coating amount of the infrared curable ink composition. For example, generally, the above time of irradiation with infrared rays is preferably 0.1 seconds or longer. When the irradiation time is 0.1 seconds or longer, it is possible to perform sufficient irradiation with infrared rays to cure the infrared curable ink composition. As the irradiation time becomes longer, it is possible to perform sufficient evaporation of the solvent in, for example, the ink composition that is curable through absorption of infrared rays. Considering high-speed printing or coating, the irradiation time is preferably within 30 seconds and more preferably within 10 seconds.

No particular limitation is imposed on an irradiation source of infrared rays. Infrared rays may be directly obtained from a heat source. Alternatively, a heat medium may be used and radiation of effective infrared rays may be obtained therefrom. For example, infrared rays can be obtained from an electric-discharge lamp of, for example, mercury, xenon, cesium, or sodium; a carbon dioxide laser; by heating an electric resistor of, for example, platinum, tungsten, nichrome, or kanthal; or the like. Note that, a preferable radiation source is, for example, a halogen lamp or laser light. The halogen lamp has advantages such as high thermal efficiency, quick rising, and the like.

Irradiation of the coated product with infrared rays may be performed from the coated surface of the substrate with the infrared curable ink composition, or may be performed from the rear surface thereof. It is preferable to perform irradiation from both of the surfaces at the same time. It is also preferable to perform the irradiation in combination with drying under heating or drying through air blowing. Also, if necessary, use of a light-condensing plate is more preferable. By combining these methods, it is possible to cure the infrared curable ink composition by short-term irradiation with infrared rays.

Note that, according to the production method of the infrared cured product of the present embodiment, it is possible to produce, for example, the infrared cured film that is an infrared cured product in the form of a film. Also, by repeatedly stacking the cured product of the infrared curable ink composition, a three-dimensional object can be fabricated. That is, it is possible to repeatedly perform the above-described coating step and irradiation step, and produce an infrared cured product having a desired three-dimensional structure.

According to the production method of the infrared cured product of the present embodiment, photofabrication can be performed. That is, it is possible to achieve photofabrication including the coating step and the curing step as described above.

The infrared absorbing particles included in the infrared curable ink composition, which is used for production of the infrared cured product of the present embodiment, have transmissivity with respect to visible light. Thus, by curing the infrared curable ink composition with infrared rays, it is possible to obtain a transparent infrared shielding film in a simplified manner.

Also, as described above, at least one or more of various pigments and dyes may be added to the infrared curable ink composition. Use of the infrared curable ink composition including such pigments and the like can readily obtain a colored film. In the colored film, there is no appreciable impact of the infrared absorbing particles on the hue thereof. Therefore, it becomes possible to use the colored film as, for example, a color filter of a liquid crystal display.

The pigments and the like that are suitably used for obtaining the above colored film are already described in the description for the infrared curable ink composition, and thus description thereof is omitted here.

### EXAMPLES

In the following, the present invention will be specifically described by way of examples. However, the present invention is not limited thereto.

### (Evaluation methods)

Evaluation methods will be described in the following Examples and Comparative Examples.

### (1) Analysis of composition (quantitative analysis of Cs, W, and O)

Analysis of composition was performed on particles of the complex tungsten oxide (e.g., cesium tungsten oxide or the like) that were infrared absorbing particles produced in the following Examples and Comparative Examples.

Cs was evaluated by a flame atomic absorption spectrometer (obtained from VARIAN, Model: SpectrAA 220FS). W was evaluated by an ICP optical emission spectrometer (obtained from Shimadzu Corporation, Model: ICPE9000). O was evaluated by an oxygen/nitrogen simultaneous analyzer (obtained from LECO, Model: ON836). Note that, K and Rb were evaluated in the same manner as in Cs.

The evaluation results were presented in the column "Chemical formula" in "Complex tungsten oxide" of Table 1.

### (2) Crystal structure and crystallite diameter

In order to measure the crystal structure of the particles of the complex tungsten oxide that were the infrared absorbing particles, first, X-ray diffraction patterns of the infrared absorbing particles produced in the following Examples and Comparative Examples were measured through powder X-ray diffraction (Θ-2Θ method) using a powder X-ray diffractometer (X'Pert-PRO/MPD, obtained from Spectris PANalytical). From the obtained X-ray diffraction pattern, the crystal structure of the complex tungsten oxide included in the infrared absorbing particles was determined.

Also, the particles of the complex tungsten oxide obtained by removing the solvent from the infrared absorbing particle liquid dispersion produced in the following Examples and Comparative Examples were measured for an X-ray diffraction pattern through powder X-ray diffraction using the above powder X-ray diffractometer. From the obtained X-ray diffraction pattern, the crystallite diameter of the complex tungsten oxide was calculated using the Rietveld method.

### (3) Peeling test of infrared cured film and evaluation of long-term storage stability

The infrared cured films obtained in the following Examples and Comparative Examples were each cut to have 100 incisions in a grid pattern using a cutter guide with gap intervals of 1 mm. A piece of tape 18 mm wide (CELLOTAPE (registered trademark) CT-18, obtained from NICHIBAN CO., LTD.) was attached to the surface that was incised in the grid pattern. A roller of 2.0 kg was moved back and forth 20 times so that the tape would be completely attached thereto. Subsequently, the tape was rapidly peeled off at a peeling angle of 180 degrees, and the number of peeled areas was counted. Based on the number of peeled areas, evaluation was performed in accordance with the following:
A: the number of peeled areas was 0;
B: the number of peeled areas was 1 or more and 3 or less; and
C: the number of peeled areas was 4 or more.

The evaluation "A" means that a sufficient amount of heat was generated by irradiation with infrared rays, thereby curing the thermosetting resin and producing the infrared cured film excellent in adhesion to the substrate. The evaluations "B" and "C" mean adhesion to the substrate degraded in this order compared to the evaluation "A".

Note that, infrared curable ink compositions and infrared cured films were produced under similar conditions except that the infrared absorbing particle liquid dispersion including the infrared absorbing particles was stored at room temperature for 3 months. The peeling test was performed to the produced infrared cured films in a similar manner. The results of the peeling test were evaluations of long-term storage stability.

### (Experimental Examples)

In the following, production conditions and the like for samples in Examples and Comparative Examples will be described.

### [Example 1]

### (Preparation of infrared absorbing particles)

23.5 g of Cs₂CO₃ was dissolved in 36 g of water. The resulting solution was added to 109 g of H₂WO₄, followed by sufficiently stirring and then drying, thereby producing a raw material mixture according to Example 1 (the raw material preparation step) .

Next, in the hybrid plasma reactor 10, as illustrated in FIG. 1, in which a direct-current plasma and a high-frequency plasma were superimposed, the reaction step was performed using the raw material mixture prepared in the raw material preparation step.

First, the interior of a reaction system was vacuumed to about 0.1 Pa (about 0.001 torr) by the vacuum exhauster 13, followed by completely substituting with argon gas, thereby achieving an argon gas flow system of 1 atm.

Argon gas was allowed to flow at 8 L/min from the plasma-generating gas supply port 15, thereby generating a direct-current plasma. An input of a direct-current power at this time was 6 kW.

Moreover, a high-frequency plasma was generated by allowing argon gas (40 L/min) and hydrogen gas (3 L/min) to helically (spirally) flow from the sheath gas inlet 16, as gas for generation of a high-frequency plasma and for protection of a quartz tube, along the inner wall of the water-cooled quartz double tube 11.

An input of a high-frequency power at this time was 45 kW. After generating such a hybrid plasma, a gas mixture of argon gas (3 L/min) and oxygen gas (0.01 L/min) was used as a carrier gas, thereby supplying the raw material mixture according to Example 1 into the plasma at a supply speed of 2 g/min from the raw material powder supply apparatus 19.

As a result, the raw materials instantly evaporated, and condensed in the plasma tail flame region to form into fine particles. At the bottom of the reaction chamber 12, cesium tungsten oxide particles "a", which were the infrared absorbing particles, were recovered.

The particle diameter of the recovered cesium tungsten oxide particles "a" was determined through TEM observation, and the particle diameter of the evaluated 30 particles was confirmed to be 10 nm or more and 50 nm or less. Note that, the particle diameter was calculated, with the diameter of the smallest circle circumscribing the particle to evaluate being defined as the particle diameter of the particle of interest. In the other Examples and Comparative Examples as described below, the particle diameter of the infrared absorbing particles was evaluated under the same conditions and in the same manner.

The recovered cesium tungsten oxide particles "a" were subjected to quantitative analysis of Cs, W, and O, which were as a result 14.7 wt%, 65.5 wt%, and 18.3 wt%, respectively. The chemical formula calculated from the quantitative analysis could be confirmed to be Cs_{0.31}WO_{3.21} as presented in Table 1.

The cesium tungsten oxide particles "a" were determined for the crystal structure of the compound included in the cesium tungsten oxide particles "a". As a result, the same peaks as the peaks of Cs_{0.3}WO₃ of a hexagonal crystal were confirmed. As described above, from an X-ray diffraction pattern, the crystal structure of the obtained complex tungsten oxide can be determined. In the present example, as described above, regarding the crystal structure of the compound included in the particles of the complex tungsten oxide, the observed peaks match the peaks of a similar complex tungsten oxide of a hexagonal crystal. Therefore, the crystal structure of the complex tungsten oxide obtained in the present example, i.e., the cesium tungsten oxide, can be confirmed to be of a hexagonal crystal.

### (Preparation of infrared absorbing particle liquid dispersion (A-1))

Next, cesium tungsten oxide particles "a" (20% by mass) and pure water (80% by mass) were weighed and charged to a paint shaker (obtained from ASADA IRON WORKS, CO., LTD.) including 0.3 mmϕ ZrO₂ beads, followed by performing a milling/dispersing treatment for 50 minutes, thereby preparing an infrared absorbing particle liquid dispersion (liquid A-1).

Here, the dispersion particle diameter of cesium tungsten oxide particles (a-1) in liquid A-1 was measured with a particle size analyzer based on dynamic light scattering (ELS-8000, obtained from Otsuka Electronics Co., Ltd.). The dispersion particle diameter thereof was 80 nm.

Also, liquid A-1 was fractionated, followed by removal of the solvent. The crystallite diameter of cesium tungsten oxide particles (a-1) was 24 nm. Note that, when the infrared absorbing particles were prepared as the infrared curable ink composition, the infrared absorbing particles were evaluated for the particle diameter, the dispersion particle diameter, and the crystallite diameter in the same manner as in the above-described liquid dispersion or the like. As a result, the prepared infrared curable ink composition could be confirmed to exhibit the same values. In the following Examples and Comparative Examples, similarly, the particle diameter, the dispersion particle diameter, and the crystallite diameter of the infrared absorbing particles in the infrared curable ink composition are the same results as the evaluation results in the produced infrared absorbing particles and the liquid dispersions.

### (Preparation of infrared curable ink composition)

Liquid A-1 was heated to 70°C and kept for 500 hours under stirring. Subsequently, the solvent was removed from the thus-treated liquid A-1, followed by drying in a nitrogen atmosphere. The obtained dry powder (20% by mass), methyl isobutyl ketone (65% by mass), and an acrylic dispersant (15% by mass) were weighed and charged to a paint shaker (obtained from ASADA IRON WORKS, CO., LTD.) including 0.3 mmϕ ZrO₂ beads, followed by crushing for 50 minutes, thereby preparing an infrared absorbing particle liquid dispersion (liquid A-2).

Liquid A-2 (25% by mass) was mixed with a commercially available one component-type uncured epoxy resin-based thermally curable ink (obtained from Teikoku Printing Inks Mfg. Co., Ltd., MEG screen ink (medium (clear))) (75% by mass), thereby preparing an infrared curable ink composition according to Example 1.

This infrared curable ink composition was coated on a glass plate with a bar coater (No. 10), thereby forming a coated product (coated film) (the coating step). A line heater, HYP-14N (output power: 980 W) obtained from HYBEC CORPORATION was used as an irradiation source of infrared rays and disposed at a height of 5 cm from the coated surface, followed by irradiating the coated product with infrared rays for 10 seconds, thereby producing an infrared cured film (the curing step).

### (Initial peeling test)

The obtained cured film was visually confirmed to be transparent. The above-described peeling test of the infrared cured film was performed, and the evaluation result was "A". The evaluation result was presented in the column "Initial evaluation" of Table 1.

### (Evaluation of long-term storage stability)

Moreover, an infrared curable ink composition was prepared in the same manner as described above except that liquid A-2 was stored at room temperature for 3 months and the stored liquid A-2 was used. The prepared infrared curable ink composition was used to produce an infrared cured film.

Specifically, liquid A-2 after 3-month storage (25% by mass) was mixed with a commercially available one component-type uncured epoxy resin-based thermally curable ink (obtained from Teikoku Printing Inks Mfg. Co., Ltd., MEG screen ink (medium (clear))) (75% by mass), thereby preparing a thermally curable ink composition after 3-month storage. Also, an infrared cured film was produced in the same manner as described above except that the prepared infrared curable ink composition was used. The peeling test was performed to the produced infrared cured film. The evaluation result was presented in the column "Evaluation after storage" of Table 1.

### [Example 2]

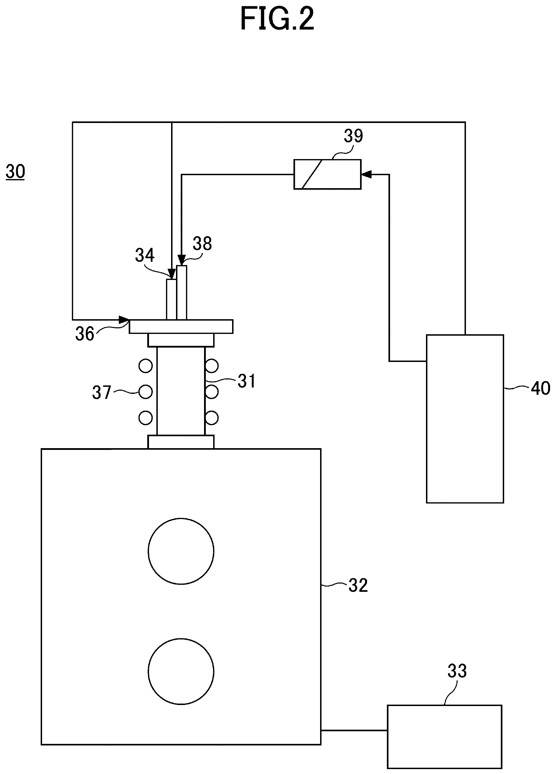

Using a high-frequency plasma reactor 30 as illustrated in FIG. 2, infrared absorbing particles were prepared.

The high-frequency plasma reactor 30 includes a water-cooled quartz double tube 31 and a reaction chamber 32 connected to the water-cooled quartz double tube 31. Also, a vacuum exhauster 33 is connected to the reaction chamber 32.

A plasma-generating gas supply port 34 is provided above the water-cooled quartz double tube 31.

The high-frequency plasma reactor 30 is configured that a sheath gas for generation of a high-frequency plasma and for protection of a quartz tube can be supplied along the inner wall of the water-cooled quartz double tube 31. A flange above the water-cooled quartz double tube 31 is provided with a sheath gas inlet 36.

A water-cooled copper coil 37 for generation of a high-frequency plasma is disposed around the water-cooled quartz double tube 31.

A raw material powder carrier gas supply port 38 is provided near the plasma-generating gas supply port 34, and is connected via a tube to a raw material powder supply apparatus 39 configured to supply raw material powder.

A gas supply apparatus 40 is connected via tubes to the plasma-generating gas supply port 34, the sheath gas inlet 36, and the raw material powder supply apparatus 39 so that a predetermined gas can be supplied from the gas supply apparatus 40 to respective members. Note that, if necessary, a supply port may be provided in portions of the apparatus in addition to the above members so as to be able to cool the members in the apparatus and achieve a predetermined atmosphere in the apparatus. The supply port may be connected to the gas supply apparatus 40.

In the present example, first, a high-frequency plasma was generated by allowing argon gas (30 L/min) to flow from the plasma-generating gas supply port 34, and mixing and helically supplying argon gas at a flow rate of 40 L/min and hydrogen gas at a flow rate of 3 L/min from the sheath gas inlet 36. An input of a high-frequency power at this time was 45 kW.

Next, a gas mixture of argon gas (3 L/min) and oxygen gas (0.01 L/min) was used as a carrier gas, thereby supplying the raw material mixture prepared in Example 1 into the plasma at a supply speed of 2 g/min from the raw material powder supply apparatus 39.

As a result, the particle diameter of the infrared absorbing material particles recovered at the bottom of the reaction chamber 32 was 10 nm or more and 50 nm or less through TEM observation.

The X-ray diffraction pattern of the obtained cesium tungsten oxide particles, which were the infrared absorbing particles according to Example 2, was measured through powder X-ray diffraction (Θ-2Θ method). From the obtained X-ray diffraction pattern, the crystal structure included in the particles of interest was determined, and confirmed to have the same peaks as the peaks of Cs_{0.3}WO₃ of a hexagonal crystal.

In the same manner as in Example 1 except that the infrared absorbing particles according to Example 2 were used, an infrared curable ink composition and an infrared cured film were produced and evaluated. The evaluation results were presented in Table 1.

Also, in the same manner as in Example 1, the solvent was removed from the infrared absorbing particle liquid dispersion, and the crystallite diameter of the cesium tungsten oxide particles, which were the infrared absorbing particles recovered from the liquid dispersion, was evaluated. As a result, the crystallite diameter thereof was 25.2 nm, and the lattice constant was 7.4146 angstroms in "a" axis and 7.5995 angstroms in "c" axis.

### [Example 3]

In the same manner as in Example 2 except that unlike in Example 2, a gas mixture of argon gas (5 L/min) and oxygen gas (0.01 L/min) was used as the carrier gas when supplying the raw material mixture, infrared absorbing particles according to Example 3 were produced and evaluated.

The particle diameter of the infrared absorbing particles recovered from the high-frequency plasma reactor 30 was 10 nm or more and 50 nm or less through TEM observation.

The X-ray diffraction pattern of the obtained infrared absorbing particles according to Example 3 was measured through powder X-ray diffraction (Θ-2Θ method). From the obtained X-ray diffraction pattern, the crystal structure included in the particles of interest was determined, and confirmed to have the same peaks as the peaks of Cs_{0.3}WO₃ of a hexagonal crystal.

In the same manner as in Example 1 except that the infrared absorbing particles according to Example 3 were used, an infrared curable ink composition and an infrared cured film were produced and evaluated. The evaluation results were presented in Table 1.

Also, in the same manner as in Example 1, the solvent was removed from the infrared absorbing particle liquid dispersion, and the crystallite diameter of the cesium tungsten oxide particles, which were the infrared absorbing particles recovered from the liquid dispersion, was 24.5 nm. Also, the lattice constant obtained by the Rietveld method was 7.4148 angstroms in "a" axis and 7.5995 angstroms in "c" axis.

### [Example 4]

In the same manner as in Example 2 except that unlike in Example 2, a gas mixture of argon gas (4 L/min) and oxygen gas (0.01 L/min) was used as the carrier gas when supplying the raw material mixture, infrared absorbing particles according to Example 4 were produced.

The particle diameter of the infrared absorbing particles recovered from the high-frequency plasma reactor 30 was 10 nm or more and 50 nm or less through TEM observation.

The X-ray diffraction pattern of the obtained infrared absorbing particles according to Example 4 was measured through powder X-ray diffraction (Θ-2Θ method). From the obtained X-ray diffraction pattern, the crystal structure included in the particles of interest was determined, and confirmed to have the same peaks as the peaks of Cs_{0.3}WO₃ of a hexagonal crystal.

In the same manner as in Example 1 except that the infrared absorbing particles according to Example 4 were used, an infrared curable ink composition and an infrared cured film were produced and evaluated. The evaluation results were presented in Table 1.

Also, in the same manner as in Example 1, the solvent was removed from the infrared absorbing particle liquid dispersion, and the crystallite diameter of the complex tungsten oxide particles, which were the infrared absorbing particles recovered from the liquid dispersion, was 21.7 nm. Also, the lattice constant obtained by the Rietveld method was 7.4116 angstroms in "a" axis and 7.5955 angstroms in "c" axis.

### [Example 5]

13.43 g of K₂CO₃ was dissolved in 59 g of water. The resulting solution was added to 180 g of H₂WO₄, followed by sufficiently stirring and then drying, thereby producing a raw material mixture according to Example 5.

In the same manner as in Example 2, the raw material mixture according to Example 5 was supplied into the plasma, thereby producing powder of K_{0.27}WO_{3.14} particles that were the infrared absorbing particles according to Example 5.

The particle diameter of the recovered infrared absorbing particles was 10 nm or more and 50 nm or less through TEM observation.

The X-ray diffraction pattern of the obtained infrared absorbing particles according to Example 5 was measured through powder X-ray diffraction (Θ-2Θ method). From the obtained X-ray diffraction pattern, the crystal structure included in the particles of interest was determined, and confirmed to have the same peaks as the peaks of K_{0.27}WO₃ of a hexagonal crystal.

In the same manner as in Example 1 except that the infrared absorbing particles according to Example 5 were used, an infrared curable ink composition and an infrared cured film were produced and evaluated. The evaluation results were presented in Table 1.

Also, in the same manner as in Example 1, the solvent was removed from the infrared absorbing particle liquid dispersion, and the crystallite diameter of the complex tungsten oxide particles, which were the infrared absorbing particles recovered from the liquid dispersion, was 24.4 nm.

### [Example 6]

22.17 g of Rb₂CO₃ was dissolved in 50 g of water. The resulting solution was added to 150 g of H₂WO₄, followed by sufficiently stirring and then drying, thereby producing a raw material mixture according to Example 6.

In the same manner as in Example 2, the raw material mixture according to Example 6 was supplied into the plasma, thereby producing powder of Rb_{0.3}WO_{3.16} particles that were the near-infrared absorbing particles according to Example 6.

The particle diameter of the recovered infrared absorbing particles was 10 nm or more and 50 nm or less through TEM observation.

The X-ray diffraction pattern of the obtained infrared absorbing particles according to Example 6 was measured through powder X-ray diffraction (Θ-2Θ method). From the obtained X-ray diffraction pattern, the crystal structure included in the particles of interest was determined, and confirmed to have the same peaks as the peaks of Rb_{0.3}WO₃ of a hexagonal crystal.

In the same manner as in Example 1 except that the infrared absorbing particles according to Example 6 were used, an infrared curable ink composition and an infrared cured film were produced and evaluated.

Also, in the same manner as in Example 1, the solvent was removed from the infrared absorbing particle liquid dispersion, and the crystallite diameter of the complex tungsten oxide particles, which were the infrared absorbing particles recovered from the liquid dispersion, was 23.9 nm. The lattice constant was 7.3958 angstroms in "a" axis and 7.5605 angstroms in "c" axis.

### [Comparative Example 1]

The cesium tungsten oxide particles "a" obtained in Example 1 were baked at 500°C for one hour in a 3% H₂ gas atmosphere using N₂ gas as a carrier gas, thereby preparing infrared absorbing particles according to Comparative Example 1.

The infrared absorbing particles according to Comparative Example 1 were coarser than the infrared absorbing particles according to Example 1 because of the baking at 500°C for one hour in the 3% H₂ gas atmosphere. Thus, a dispersion and milling time for preparing the infrared absorbing particle liquid dispersion was 2 hours.

In the same manner as in Example 1 except that the above infrared absorbing particle liquid dispersion was used instead of liquid A-1 of Example 1, an infrared curable ink composition and an infrared cured film were produced and evaluated. The evaluation results were presented in Table 1.

In the same manner as in Example 1, the X-ray diffraction pattern of the obtained infrared absorbing particles according to Comparative Example 1 was measured through powder X-ray diffraction (Θ-2Θ method). From the obtained X-ray diffraction pattern, the crystal structure included in the particles of interest was determined, and confirmed to have the same peaks as the peaks of Cs_{0.3}WO₃ of a hexagonal crystal.

Also, in the same manner as in Example 1, the solvent was removed from the infrared absorbing particle liquid dispersion, and the crystallite diameter of the complex tungsten oxide particles, which were the recovered infrared absorbing particles, was 9 nm. The lattice constant thereof was 7.4100 angstroms in "a" axis and 7.6300 angstroms in "c" axis.

**[Table 1]**

| | Complex tungsten oxide | | Peeling test | |
|---|---|---|---|---|
| | Crystal structure | Chemical formula | Initial evaluation | Evaluation after storage |
| Example 1 | Hexagonal crystal | Cs_{0.31}WO_{3.21} | A | A |
| Example 2 | Hexagonal crystal | Cs_{0.31}WO_{3.21} | A | A |
| Example 3 | Hexagonal crystal | Cs_{0.29}WO_{3.03} | A | A |
| Example 4 | Hexagonal crystal | Cs_{0.29}WO_{3.13} | A | A |
| Example 5 | Hexagonal crystal | K_{0.27}WO_{3.14} | A | A |
| Example 6 | Hexagonal crystal | Rb_{0.30}WO_{3.16} | A | A |
| Comparative Example 1 | Hexagonal crystal | Cs_{0.32}WO_{2.65} | B | C |

### [Conclusion]

As is clear from the evaluation results, the infrared cured films could be formed by irradiating the infrared curable ink compositions according to Example 1 to Example 6 with infrared rays for a short period of time, i.e., 10 seconds. Thus, it was confirmed that the infrared curable ink compositions were excellent in infrared ray absorbability.

Also, it was confirmed in Example 1 to Example 6 that the results of the peeling test were not changed in the infrared cured films using the infrared curable ink compositions produced after the infrared absorbing particle liquid dispersions serving as the raw materials were stored for 3 months. Meanwhile, it was confirmed in Comparative Example 1 that the result of the peeling test was degraded in the infrared cured film using the infrared curable ink composition produced after the infrared absorbing particle liquid dispersion serving as the raw material was stored for 3 months.

That is, it was confirmed that no considerable change occurred in the infrared ray absorbability of the infrared curable ink compositions of Example 1 to Example 6 even after the 3-month storage, and a sufficient quantity of heat was generated by irradiation with infrared rays so as to cure the thermosetting resin and produce infrared cured films excellent in adhesion to the substrates. Meanwhile, it was considered that because the infrared curable ink composition according to Comparative Example 1 was degraded in infrared ray absorbability after the 3-month storage, the obtained infrared cured film was degraded in the adhesion to the substrate.

The above results confirmed that the infrared curable ink compositions of Example 1 to Example 6 were more excellent in long-term storage stability than the infrared curable ink composition of Comparative Example 1.

Note that, although in the above Examples and Comparative Example, the infrared curable ink compositions were produced and evaluated after the infrared absorbing particle liquid dispersions were stored for 3 months, a similar tendency could be confirmed even when the infrared curable ink compositions were produced followed by the long-term storage.

The present application claims priority to Japanese Patent Application No. 2021-138766, filed with the JPO on August 27, 2021, the contents of Japanese Patent Application No. 2021-138766 are incorporated herein by reference in their entirety.

### REFERENCE SIGNS LIST

100 infrared curable ink composition
110 infrared absorbing particles
120 thermosetting resin

## Claims

1. An infrared curable ink composition, comprising:
infrared absorbing particles; and
a thermosetting resin, wherein
the infrared absorbing particles include particles of a complex tungsten oxide represented by general formula MₓW_{y}O_{z} (where M element is one or more elements selected from H, He, alkali metals, alkaline earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi, and I; W is tungsten, O is oxygen, 0.001 ≤ x/y ≤ 1, and 3.0 < z/y).

2. The infrared curable ink composition according to claim 1, wherein
a particle diameter of the infrared absorbing particles is 10 nm or more and 100 nm or less.

3. The infrared curable ink composition according to claim 1 or 2, wherein
a dispersion particle diameter of the infrared absorbing particles is 1 nm or more and 800 nm or less.

4. The infrared curable ink composition according to any one of claims 1 to 3, wherein
the complex tungsten oxide includes a crystal structure of a hexagonal crystal.

5. The infrared curable ink composition according to claim 4, wherein
the M element includes one or more elements selected from Cs, Rb, K, Tl, In, Ba, Li, Ca, Sr, Fe, and Sn.

6. The infrared curable ink composition according to any one of claims 1 to 5, wherein
a surface of the infrared absorbing particles is coated with a compound including one or more elements selected from Si, Ti, Zr, and Al.

7. The infrared curable ink composition according to any one of claims 1 to 6, further comprising:
one or more selected from organic pigments, inorganic pigments, and dyes.

8. The infrared curable ink composition according to any one of claims 1 to 7, further comprising:
a dispersant.

9. The infrared curable ink composition according to any one of claims 1 to 8, further comprising:
a solvent.

10. An infrared cured product, comprising:
a cured product of the infrared curable ink composition according to any one of claims 1 to 9.

11. A production method of an infrared cured product, the production method comprising:
a coating step of coating the infrared curable ink composition according to any one of claims 1 to 9, thereby forming a coated product; and
a curing step of irradiating the coated product with infrared rays, thereby curing the coated product.
